# EUROPÄISCHE PATENTSCHRIFT

(11) **EP 4 317 749 B1**
(45) Veröffentlichungstag und Bekanntmachung des Hinweises auf die Patenterteilung: **30.04.2025**
(21) Anmeldenummer: 23189108.6
(22) Anmeldetag: 02.08.2023
(51) Int. Cl.: F16J 15/10, F16L 17/02, F16L 47/08, B01F 23/2361, F16J 15/02

(54) **DICHTUNGSANORDNUNG UND WASSERAUFBEREITUNGSGERÄT, DAS DIE DICHTUNGSANORDNUNG UMFASST**
SEAL ASSEMBLY AND WATER TREATMENT DEVICE COMPRISING THE SEAL ASSEMBLY
ENSEMBLE JOINT ET APPAREIL DE TRAITEMENT D'EAU COMPRENANT L'ENSEMBLE JOINT

(30) Priorität: 04.08.2022 DE 102022119580
(43) Veröffentlichungstag der Anmeldung: 07.02.2024
(73) Patentinhaber: Carl Freudenberg KG, 69469 Weinheim (DE)
(72) Erfinder: Kinsch, Patrick, 34590 Wabern (DE); Wüstenhagen, Ulrich, 34613 Schwalmstadt (DE); May, Alexander, 34630 Gilserberg (DE); van Dawen, Mert, 34613 Schwalmstadt (DE); Plag, Martin, 34613 Schwalmstadt (DE)

(56) Entgegenhaltungen:
- CN-A- 102 213 351
- DE-B- 1 269 435
- GB-A- 2 327 993
- US-A- 4 602 792
- US-A1- 2011 037 249

## Beschreibung

### Technisches Gebiet

Die Erfindung betrifft eine Dichtungsanordnung und ein Wasseraufbereitungsgerät, das die Dichtungsanordnung umfasst.

### Stand der Technik

Dichtungsanordnungen und Wasseraufbereitungsgeräte, die Dichtungsanordnungen umfassen, sind allgemein bekannt.

Um CO₂-Flaschen funktionssicher in Wasseraufbereitungsgeräte anschließen zu können, wird eine Dichtung benötigt, die üblicherweise durch einen O-Ring gebildet ist.

O-Ringe haben insbesondere in diesem Fall jedoch den Nachteil, dass sie nur geringe herstellungsbedingte Toleranzen der gegeneinander abzudichtenden Maschinenelemente überbrücken können. Außerdem sind hohe Montagekräfte zur Montage des O-Rings erforderlich. Auch Handhabungskräfte zur Montage eines mit einem O-Ring versehenen Maschinenelements mit einem anderen Maschinenelement sind hoch.

Insbesondere dann, wenn größere herstellungsbedingte Toleranzen überbrückt werden müssen, kann es zu unerwünschten Undichtigkeiten und, im genannten Fall, zu einem unerwünschten Austritt von Kohlenstoffdioxid aus der CO₂-Flasche kommen.

Aufgrund der verschiedenen Bauteile kann es zu größeren Toleranzen kommen, da sich die Toleranzen der einzelnen Bauteile überlagern bzw. aufsummieren und sie damit größer werden als im Maschinenbau übliche Toleranzen mit wenigen Zehnteln.

Eine Dichtung für eine hydraulische Kupplung ist aus der US 2011/0037249 A1 bekannt. Die Dichtung umfasst einen Dichtring aus einem Dichtungswerkstoff mit einem im Wesentlichen U-förmigen Längsschnitt, wobei der Dichtring in axialer Richtung beiderseits durch einen ersten und einen zweiten Radialschenkel begrenzt ist, wobei die Radialschenkel in radialer Richtung außenumfangsseitig durch einen Axialschenkel miteinander verbunden sind, wobei der erste Radialschenkel auf seiner dem zweiten Radialschenkel axial abgewandten Seite eine erste axiale Dichtkante und eine zweite axiale Dichtkante aufweist, wobei die zweite axiale Dichtkante die erste axiale Dichtkante mit radialem Abstand außenumfangsseitig umschließt, wobei der Dichtring eine gedachte Radialebene umfasst und wobei, im herstellungsbedingten Zustand des Dichtrings, die erste axiale Dichtkante mit der Radialebene einen ersten axialen Abstand begrenzt, der größer als ein zweiter axialer Abstand ist, den die zweite axiale Dichtkante mit der Radialebene begrenzt.

Aus der DE 1 269 435 ist ein Dichtungsring aus elastischem Material bekannt, um axial gegeneinander verschiebbare Teile abzudichten. Der Dichtungsring ist in einer Nut eines der beiden Teile angeordnet und hat einen annähernd quadratischen Grundquerschnitt mit drei wulstartig abgerundeten Kanten, zwischen denen Einbuchtungen mit konkaven Wölbungen vorgesehen sind, die jeweils unmittelbar in die wulstartig abgerundeten Kanten.

Aus der CN 102 213 351 A1, der GB 2 327 993 A und der US 4 602 792 A sind jeweils ebenfalls Dichtungen bekannt, die aus einem Dichtungswerkstoff bestehen und, im Schnitt betrachtet, im Wesentlichen U-förmig ausgebildet sind. Die vorbekannten Dichtungen gelangen im Zusammenhang mit Rohrverbindungen zur Anwendung. Dazu sind sie in Steckstücken eingesetzt und dichten gegenüber Rohren ab, die durch die Steckstücke miteinander verbunden sind.

### Darstellung der Erfindung

Der Erfindung liegt die Aufgabe zu Grunde, eine Dichtungsanordnung und ein Wasseraufbereitungsgerät der eingangs genannten Art derart weiterzuentwickeln, dass die Dichtungsanordnung geeignet ist, auch größere Toleranzen sicher zu überbrücken und dabei Drücke von zumindest 60 bar sicher abzudichten. Außerdem sollen die Montage- und Handhabungskräfte möglichst gering sein.

Außerdem liegt der Erfindung die Aufgabe zu Grunde, dass der Dichtungswerkstoff des Dichtrings bei hoher Druckbeaufschlagung und/oder hoher mechanischer Verpressung nicht in Trennfugen von gegeneinander abzudichtenden Maschinenelementen extrudiert wird.

Diese Aufgabe wird erfindungsgemäß durch eine Dichtungsanordnung gemäß Anspruch 1 und ein Wasseraufbereitungsgerät gemäß Anspruch 9 gelöst. Auf vorteilhafte Ausgestaltungen nehmen die rückbezogenen Ansprüche Bezug.

Zur Lösung der Aufgabe ist es vorgesehen, dass das erste und das dritte Maschinenelement auf ihren einander zugewandten Seiten eine Trennfuge begrenzen und dass die Nut die Trennfuge in axialer Richtung überdeckt.

Der Axialschenkel weist außenumfangsseitig eine Abstützungsfläche auf. Die Abstützungsfläche legt sich, je nach der Höhe des abzudichtenden Drucks und/oder Höhe der mechanischen Verpressung der Dichtung im Einbauraum, mehr oder weniger stark an die radial benachbart angeordnete, entsprechende Dichtfläche eines abzudichtenden Maschinenelements an.

Die Abstützungsfläche und der erste Radialschenkel begrenzen eine außenumfangsseitig um den Dichtring umlaufende Nut. Sinnvollerweise ist die Nut, wie später noch erläutert werden wird, dort angeordnet, wo zwei gegeneinander abzudichtende Maschinenelemente eine Trennfuge begrenzen. Durch die Nut wird dann verhindert, dass Dichtungswerkstoff des Dichtrings bei hoher Druckbeaufschlagung und/oder hoher mechanischer Verpressung in die Trennfuge extrudiert wird und es dadurch zu Beschädigungen des Dichtrings kommen kann.

Es besteht die Möglichkeit, dass verdrängter Dichtungswerkstoff in die Nut verdrängt wird.

Die Dichtung dichtet in der Dichtungsanordnung die drei miteinander montierten Maschinenelemente gegeneinander ab. Üblicherweise sind die Toleranzen im Einbauraum der Dichtung umso größer, je größer die Anzahl der gegeneinander abzudichtenden Maschinenelemente ist. Die erfindungsgemäße Ausgestaltung der Dichtung begünstigt einen guten Toleranzausgleich selbst dann. Die Dichtungsanordnung ist dadurch fertigungstechnisch einfach und kostengünstig herstellbar.

Das erste und das dritte Maschinenelement begrenzen auf ihren einander zugewandten Seiten eine Trennfuge, wobei die Nut die Trennfuge in axialer Richtung überdeckt. Durch eine solche Ausgestaltung wird eine Spaltextrusion in die Trennfuge verhindert. Auch bei maximaler Druckbeaufschlagung gelangt kein Dichtungswerkstoff in die Trennfuge zwischen dem ersten und dem zweiten Maschinenelement. Eine Beschädigung/Zerstörung der Dichtung während der bestimmungsgemäßen Verwendung wird dadurch verhindert.

Es ist von Vorteil, dass die beiden axialen Dichtkanten relativ höhenversetzt zueinander ausgebildet und angeordnet sind. Je nach Höhe des abzudichtenden Drucks und/oder Höhe der montagebedingten Verpressung, mit der die Dichtung in ihrem Einbauraum angeordnet ist, liegt durch die höhenversetzte Anordnung entweder nur die erste axiale Dichtkante an der entsprechenden Dichtfläche an oder zusätzlich auch die zweite axiale Dichtkante, mit relativ zur ersten axialen Dichtkante verringerter Anpresskraft. Die zweite axiale Dichtkante wird der ersten axialen Dichtkante also bedarfsweise zugeschaltet. Durch die höhenversetzte Anordnung können auch größere Toleranzen im Einbauraum durch die Dichtung sicher überbrückt werden.

Außerdem ist von Vorteil, dass die Handhabungs- und Montagekräfte, bezogen auf einen O-Ring, vergleichsweis geringer sind, bei gleichzeitig verbesserter Abdichtung während einer langen Gebrauchsdauer.

Zwischen der ersten und der zweiten axialen Dichtkante kann, in radialer Richtung betrachtet, eine konkave Einschnürung angeordnet sein. Durch die konkave Einschnürung lassen sich die relativ zueinander höhenversetzten axialen Dichtkanten fertigungstechnisch einfach und kostengünstig herstellen. Außerdem besteht bei maximaler axialer Verpressung der Dichtung die Möglichkeit, dass verdrängter Dichtungswerkstoff von den axialen Dichtkanten in die Einschnürung verdrängt wird und eine die Gebrauchsdauer der Dichtung verringernde mechanische Belastung der Dichtkanten vermieden wird.

Beim Dichtungswerkstoff, aus dem der elastische Dichtring besteht, handelt es sich zum Beispiel um einen flexiblen Thermoplast.

Der zweite Radialschenkel kann auf seiner dem ersten Radialschenkel axial abgewandten Seite eine dritte axiale Dichtkante aufweisen.

Vorteilhafterweise ist die dritte axiale Dichtkante, in radialer Richtung betrachtet, im Wesentlichen mittig zwischen der ersten und der zweiten axialen Dichtkante angeordnet. Dadurch, dass die dritte axiale Dichtkante der ersten und zweiten axialen Dichtkante, in axialer Richtung betrachtet, gegenüberliegt, wird der Dichtring in seinem Einbauraum in der Dichtungsanordnung auch im drucklosen Zustand und bei nur geringer axialer Verpressung in seiner Position gehalten.

Die dritte axiale Dichtkante ist, im Längsschnitt des Dichtrings betrachtet, im Wesentlichen halbkreisförmig ausgebildet. Dabei ist von Vorteil, dass der Dichtring dadurch stets verkantungsfrei in seinem Einbauraum angeordnet ist.

Der zweite Radialschenkel kann, in radialer Richtung betrachtet, kürzer als der erste Radialschenkel ausgebildet sein. Dadurch, dass am zweiten Radialschenkel nur eine Dichtkante, nämlich nur die dritte axiale Dichtkante, angeordnet ist, ist eine größere Länge, insbesondere eine Länge wie beim ersten Radialschenkel mit seinen zwei Dichtkanten, nicht nötig. Dadurch kann Werkstoff bei der Herstellung der Dichtung eingespart werden, was in wirtschaftlicher Hinsicht von Vorteil ist.

Das zweite Maschinenelement weist eine sich im Wesentlichen in radialer Richtung erstreckende zweite Dichtfläche auf, die von der dritten axialen Dichtkante unter axialer Vorspannung dichtend berührt ist. Die Dichtung ist dadurch unter axialer Vorspannung in ihrem Einbauraum gehalten.

Das dritte Maschinenelement weist eine sich im Wesentlichen in axialer Richtung erstreckende dritte Dichtfläche auf, wobei die dritte Dichtfläche von der Abstützungsfläche, abhängig vom abzudichtenden Druck während der bestimmungsgemäßen Verwendung und/oder der montagebedingten axialen Verpressung der Dichtung, unter radialer Vorspannung dichtend berührbar ist. Bei hoher Druckbeaufschlagung und/oder hoher montagebedingter axialer Verpressung dichtet die Dichtung an drei Seiten ab. Die erste und die zweite axiale Dichtkante dichten jeweils an der ersten Dichtfläche des ersten Maschinenelements ab, die dritte axiale Dichtkante an der zweiten Dichtfläche des zweiten Maschinenelements, und an der dritten Dichtfläche des dritten Maschinenelements dichtet die Abstützungsfläche ab.

Besonders vorteilhaft ist die Verwendung der Dichtungsanordnung in einem Wasseraufbereitungsgerät. Für den Betreiber des Wasseraufbereitungsgeräts ist es wichtig, dass sich die CO₂-Flasche durch geringe Handhabungskräfte in das Gehäuse des Wasseraufbereitungsgeräts eindrehen oder einschrauben lässt und trotz der geringen Handhabungskräfte im Gehäuse dauerhaft dicht aufgenommen ist.

Das erste Maschinenelement wird dann durch einen Druckminderer, das zweite Maschinenelement durch einen Ventilsitz einer CO₂-Flasche und das dritte Maschinenelement durch ein Einschraubgewinde gebildet, wobei das erste, das zweite und das dritte Maschinenelement Bestandteile des Wasseraufbereitungsgeräts sind. Die Dichtung der erfindungsgemäßen Dichtungsanordnung dichtet auch größere Toleranzen des Einbauraums bei hohen Drücken, zum Beispiel bei 60 bar, zuverlässig ab. Außerdem sind die Handhabungskräfte, zum Beispiel beim Einschrauben einer CO₂-Flasche in das Gehäuse des Wasseraufbereitungsgeräts, nur gering.

### Kurzbeschreibung der Zeichnung

Ein Ausführungsbeispiel der erfindungsgemäßen Dichtungsanordnung in einem Wasseraufbereitungsgerät wird nachfolgend anhand der Figuren 1 bis 6 näher beschrieben.

Diese zeigen jeweils in schematischer Darstellung:
- Figur 1: ein Ausführungsbeispiel der Dichtung aus der erfindungsgemäßen Dichtungsanordnung in ihrem herstellungsbedingten Zustand,
- Figur 2: ein Ausführungsbeispiel der erfindungsgemäßen Dichtungsanordnung, die die Dichtung aus Figur 1 umfasst, bei maximaler Druckbeaufschlagung und maximaler montagebedingter axialer Verpressung,
- Figur 3: einen Halbschnitt aus Figur 2 im drucklosen Zustand,
- Figur 4: den Halbschnitt aus Figur 3 im drucklosen Zustand bei geringer montagebedingter axialer Verpressung,
- Figur 5: den Halbschnitt aus Figur 4 unter Druckbeaufschlagung und etwas höherer montagebedingter axialer Verpressung,
- Figur 6: den Halbschnitt aus Figur 5 bei maximaler Druckbeaufschlagung und maximaler montagebedingter axialer Verpressung, wie in Figur 2 gezeigt.

### Ausführung der Erfindung

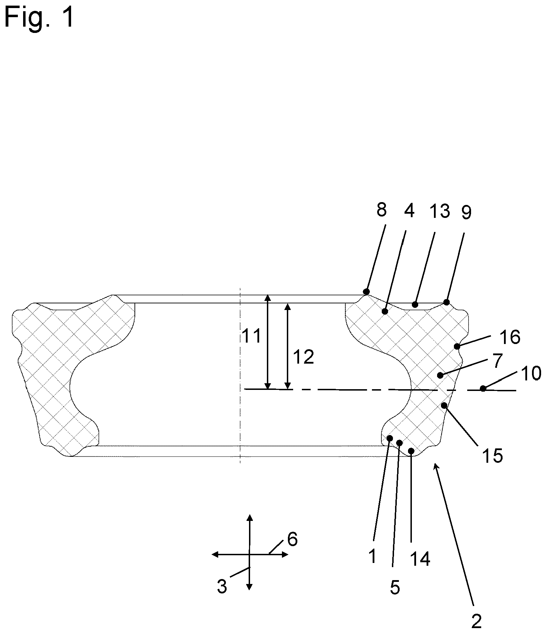

**In** Figur 1 ist ein Ausführungsbeispiel der Dichtung aus der erfindungsgemäßen Dichtungsanordnung gezeigt.

Die Dichtung umfasst den Dichtring 1, der, im Längsschnitt 2 betrachtet, im Wesentlichen U-förmig ausgebildet ist. **In** axialer Richtung 3 stirnseitig beiderseits ist der Dichtring 1 durch den ersten Radialschenkel 4 und den zweiten Radialschenkel 5 begrenzt, die in radialer Richtung 6 außenumfangsseitig durch den Axialschenkel 7 miteinander verbunden sind. Auf den in axialer Richtung 3 einander abgewandten Seiten der Radialschenkel 4, 5 sind die Dichtkanten 8, 9, 14 angeordnet.

Der erste Radialschenkel 4 weist auf seiner dem zweiten Radialschenkel 5 axial abgewandten Seite die erste axiale Dichtkante 8 und die zweite axiale Dichtkante 9 auf, die im Wesentlichen konzentrisch zueinander angeordnet sind. Die erste axiale Dichtkante 8 umschließt die zweite axiale Dichtkante 9 mit radialem Abstand außenumfangsseitig. Die beiden Dichtkanten 8, 9 sind höhenversetzt zueinander angeordnet.

**In** axialer Richtung 3 des Dichtrings 1, zum Beispiel im Wesentlichen mittig, ist die gedachte Radialebene 10 angeordnet. Die erste axiale Dichtkante 8 begrenzt mit der gedachten Radialebene 10 den ersten axialen Abstand 11, der größer als der zweite axiale Abstand 12 ist, den die zweite axiale Dichtkante 9 mit der gedachten Radialebene 10 begrenzt. Durch die unterschiedlichen axialen Abstände 11, 12 wird die zweite axiale Dichtkante 9 der ersten axialen Dichtkante 8 bedarfsweise, zum Beispiel je nach Höhe des abzudichtenden Drucks und/oder je nach Höhe der montagebedingten Verpressung, zugeschaltet. Die Dichtkanten 8, 9 sind also in einer funktionstechnischen Reihenschaltung angeordnet.

Zwischen der ersten und der zweiten axialen Dichtkante 8, 9 ist die konkave Einschnürung 13 angeordnet.

**In** radialer Richtung 6 betrachtet, im Bereich der konkaven Einschnürung 13, ist auf der dem ersten Radialschenkel 4 axial abgewandten Seite des zweiten Radialschenkels 5 die dritte axiale Dichtkante 14 angeordnet. Dadurch, dass stirnseitig des zweiten Radialschenkels 5 nur eine Dichtkante, nämlich die dritte axiale Dichtkante 14, angeordnet ist, kann der zweite Radialschenkel 5, in radialer Richtung 6 betrachtet, kürzer ausgebildet sein als der erste Radialschenkel 4.

Der Axialschenkel 7 ist außenumfangsseitig mit der Abstützungsfläche 15 versehen, die auf der dem ersten Radialschenkel 4 axial zugewandten Seite in die umlaufende Nut 16 mündet.

Die radiale Lage der dritten axialen Dichtkante 14 richtet sich nach der zweiten Dichtfläche 22 auf dem zweiten Maschinenelement 19 aus, die je nach Ventiltyp unterschiedlich angeordnet sein kann.

Die Abstützungsfläche 15 schließt mit der Symmetrieachse der Dichtung im gezeigten Ausführungsbeispiel einen Winkel ein, der vom dritten Maschinenelement 20 übernommen wird. Durch den Winkel wird ein Hinterschnitt gebildet. Dabei ist es von Vorteil, dass durch den Hinterschnitt der Dichtring 1 im Einbauraum 17 gegen Herausfallen gesichert ist. Zudem wird der Dichtring 1 während seiner Montage durch die Abstützungsfläche 15 selbst zentriert.

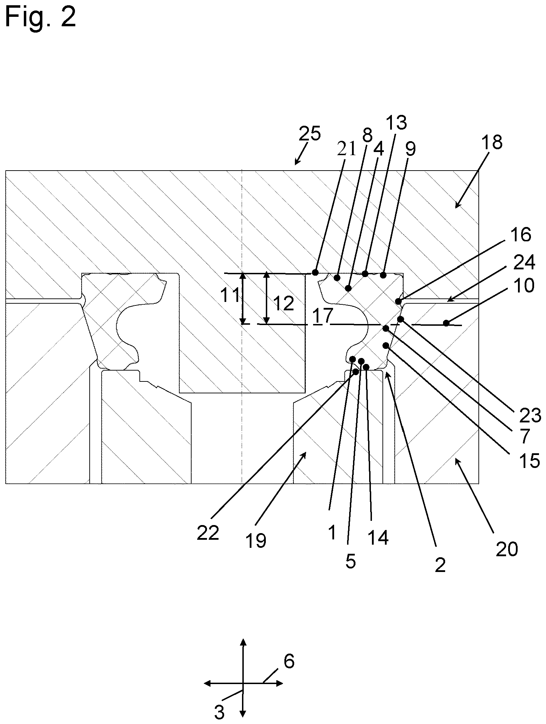

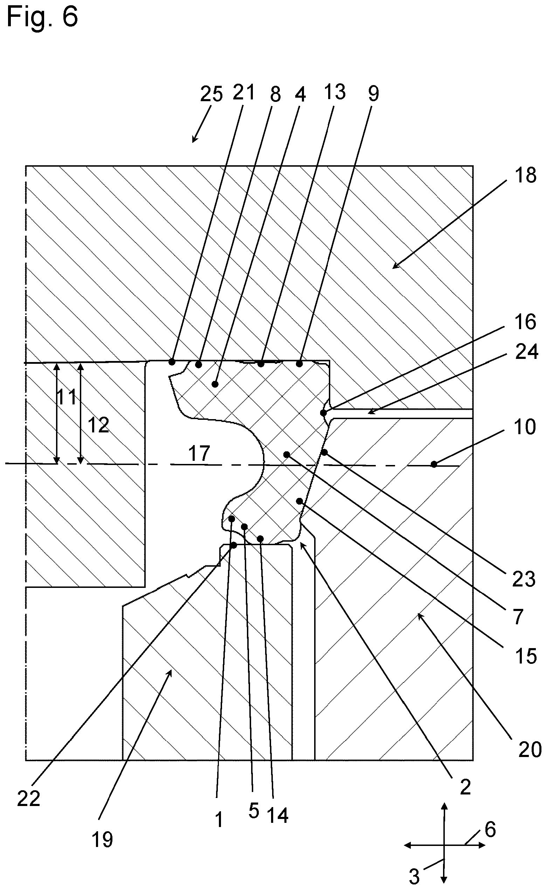

In Figur 2 ist die Dichtung aus Figur 1 eingebaut in die Dichtungsanordnung gezeigt. Die gezeigte Dichtungsanordnung entspricht bezüglich der Höhe der montagebedingten axialen Verpressung und der Höhe des abzudichtenden Drucks der Dichtungsanordnung aus Figur 6.

In Figur 2 ist die Dichtung aus Figur 1 im eingebauten Zustand gezeigt. Der Dichtring 1 ist im Einbauraum 17 angeordnet, wobei der Einbauraum 17 durch das erste 18, das zweite 19 und das dritte Maschinenelement 20 begrenzt ist. Im hier gezeigten Ausführungsbeispiel bilden alle drei Maschinenelemente 18, 19, 20 Bestandteile eines Wasseraufbereitungsgeräts 25. Das erste Maschinenelement 18 ist durch einen Druckminderer, das zweite Maschinenelement 19, durch einen Ventilsitz einer CO₂-Flasche und das dritte Maschinenelement 20 durch ein Einschraubgewinde gebildet.

Das erste Maschinenelement 18 weist die erste Dichtfläche 21 auf, die von der ersten axialen Dichtkante 8 und, im gezeigten Betriebszustand, auch von der zweiten Dichtkante 9, unter elastischer axialer Vorspannung dichtend berührt ist.

Das zweite Maschinenelement 19 umfasst die zweite Dichtfläche 22, die von der dritten axialen Dichtkante 14 unter elastischer axialer Vorspannung dichtend berührt ist.

Das dritte Maschinenelement 20 umfasst die dritte Dichtfläche 23, die von der Abstützungsfläche 15 unter elastischer radialer Vorspannung dichtend berührt ist.

Die drei Maschinenelemente 18, 19, 20 sind einanderjeweils mit Abstand benachbart zugeordnet, wobei das erste 18 und das dritte Maschinenelement 20 auf ihren einander zugewandten Seiten die Trennfuge 24 begrenzen, die von der Nut 16 in axialer Richtung 3 überdeckt ist.

Auch bei maximaler axialer Verpressung und maximaler Druckbeaufschlagung, wie hier dargestellt, wird der Dichtungswerkstoff, aus dem der Dichtring 1 besteht, nicht in die Trennfuge 24 gedrückt; eine für die Dichtung gebrauchsdauerschädliche Spaltextrusion wird dadurch vermieden.

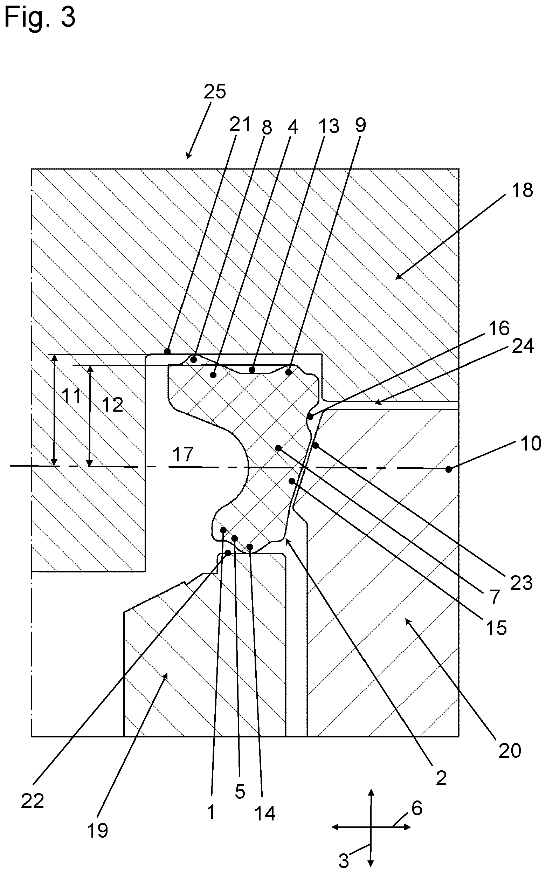

In den Figuren 3 bis 6 ist jeweils derselbe Halbschnitt aus der Dichtungsanordnung aus Figur 2 gezeigt, jedoch mit unterschiedlich hohen axialen Verpressungen und unterschiedlich hohen Drücken.

In Figur 3 ist der Dichtring 1 drucklos in der Dichtungsanordnung angeordnet. Der Dichtring 1 ist im Einbauraum 17 des ersten Maschinenelements 18, hier des Druckminderers, eingebaut und hat nur mit seiner ersten axialen Dichtkante 8 dichtenden Kontakt an der ersten Dichtfläche 21. Der Dichtring 1 orientiert sich leicht im Einbauraum 17 und fixiert sich von selbst durch Vorspannung im Einbauraum 17. Dadurch ist sichergestellt, dass der Dichtring 1 nicht aus dem Einbauraum 17 fällt.

Das zweite Maschinenelement 19, hier der Ventilsitz einer CO₂-Flasche, ist nur leicht eingeschraubt und findet Kontakt mit seiner zweiten Dichtfläche 22 an der dritten axialen Dichtkante 14. Die dritte axiale Dichtkante 14 dichtet gegen den Spalt ab, der durch das zweite 19 und dritte Maschineelement 20 begrenzt ist.

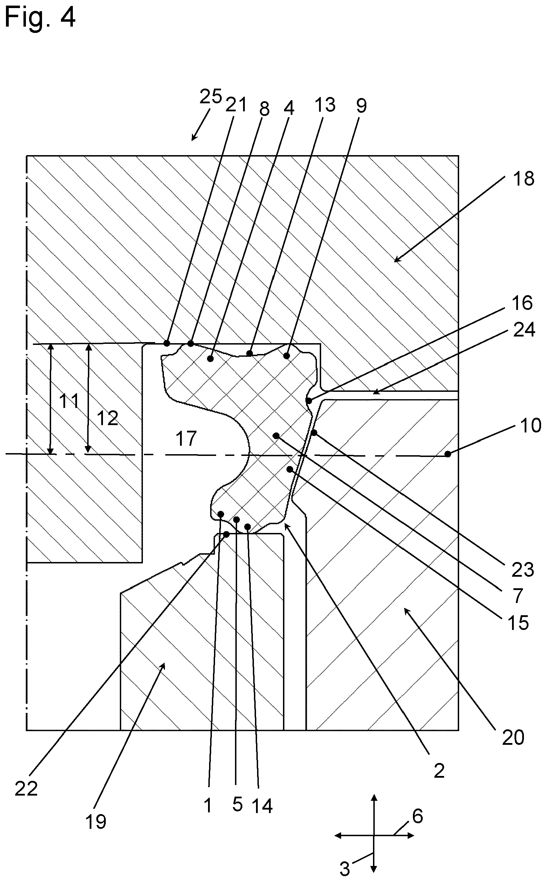

In Figur 4 ist das zweite Maschinenelement 19 vom Anwender manuell axial weiter eingeschraubt. Die montagebedingte axiale Verpressung ist relativ zum Betriebszustand aus Figur 3 vergrößert. Dabei kommt zusätzlich die zweite axiale Dichtkante 9 in Kontakt mit der ersten Dichtfläche 21, zur zusätzlichen Absicherung des abzudichtenden Drucks. Die erste axiale Dichtkante 8 wird, bezogen auf den Betriebszustand, der in Figur 3 gezeigt ist, stärker als die zweite axiale Dichtkante 9 belastet. Durch die beschriebene Zweistufigkeit ist das manuelle Einschrauben des zweiten Maschinenelements auch mit geringen Handhabungskräften möglich.

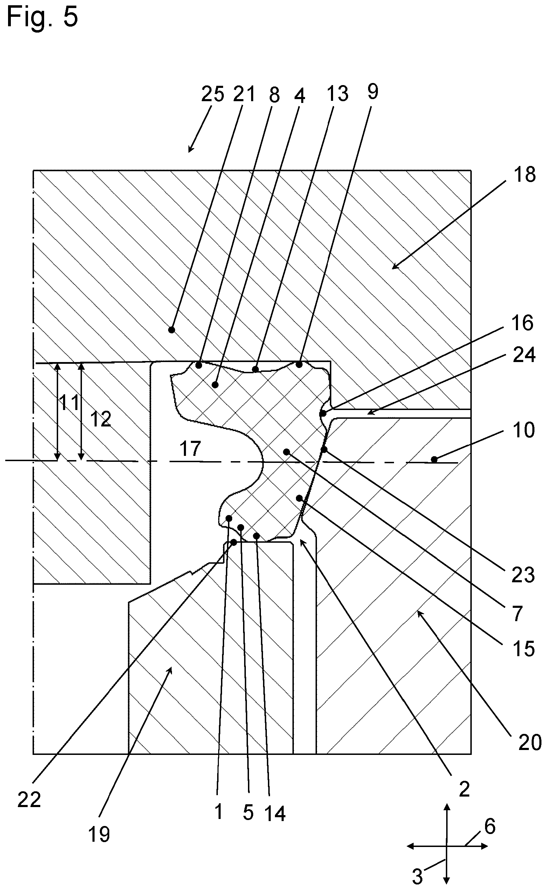

In den Figuren 5 und 6 muss der Dichtring 1 eingebrachtes CO₂ abdichten. Durch den Druck innerhalb des Einbauraums 17 stützt sich der Dichtring 1 zusätzlich mit seiner Abstützungsfläche 15 an der dritten Dichtfläche 23 des dritten Maschinenelements 20 ab.

Die Belastung für die zweite axiale Dichtkante 9 ist im Vergleich zur Belastung der ersten axialen Dichtkante 8 in dem hier gezeigten Betriebszustand höher. Die Belastung für die Dichtung wird reduziert, da die Verformung eingeschränkt ist. Durch die biegsame Ausbildung des ersten Radialschenkels 4 kann die kompakte Verpressung der Dichtung der erfindungsgemäßen Dichtungsanordnung gegenüber anderen Lösungen, zum Beispiel gegenüber des eingangs genannten O-Rings, deutlich reduziert werden. Dadurch werden im elastomeren Werkstoff der Dichtung keine unerwünscht hohen Spannungsspitzen erzeugt.

Die Dichtung ist in der Lage, Drücke bis mindestens 60 bar abzudichten, bei kleinen Handkräften für das Eindrehen/Einschrauben der CO₂-Flasche, die das zweite Maschinenelement 19 bildet.

## Patentansprüche

1. Dichtungsanordnung, umfassend eine Dichtung, die einen Dichtring (1) aus einem Dichtungswerkstoff mit einem im Wesentlichen U-förmigen Längsschnitt (2) umfasst, wobei der Dichtring (1) in axialer Richtung (3) beiderseits durch einen ersten (4) und einen zweiten Radialschenkel (5) begrenzt ist, wobei die Radialschenkel (4, 5) in radialer Richtung (6) außenumfangsseitig durch einen Axialschenkel (7) miteinander verbunden sind, wobei der erste Radialschenkel (4) auf seiner dem zweiten Radialschenkel (5) axial abgewandten Seite eine erste axiale Dichtkante (8) und eine zweite axiale Dichtkante (9) aufweist, wobei die zweite axiale Dichtkante (9) die erste axiale Dichtkante (8) mit radialem Abstand außenumfangsseitig umschließt, wobei der Axialschenkel (7) außenumfangsseitig eine Abstützungsfläche (15) aufweist und wobei die Abstützungsfläche (15) und der erste Radialschenkel (4) eine außenumfangsseitig um den Dichtring (1) umlaufende Nut (16) begrenzen, wobei die Dichtung in einem Einbauraum (17) angeordnet ist, wobei der Einbauraum (17) durch ein erstes (18), ein zweites (19) und ein drittes Maschinenelement (20) begrenzt ist, wobei das erste Maschinenelement (18) eine sich im Wesentlichen in radialer Richtung (6) erstreckende erste Dichtfläche (21) aufweist, die von der ersten axialen Dichtkante (8) unter axialer Vorspannung dichtend berührt ist und wobei die erste Dichtfläche (21) von der zweiten axialen Dichtkante (9), abhängig vom abzudichtenden Druck und/oder der montagebedingten axialen Verpressung der Dichtung während ihrer bestimmungsgemäßen Verwendung, unter axialer Vorspannung dichtend berührbar ist, **dadurch gekennzeichnet, dass** der Dichtring (1) eine gedachte Radialebene (10) umfasst, wobei, im herstellungsbedingten Zustand des Dichtrings (1), die erste axiale Dichtkante (8) mit der Radialebene (10) einen ersten axialen Abstand (11) begrenzt, der größer als ein zweiter axialer Abstand (12) ist, den die zweite axiale Dichtkante (9) mit der Radialebene (10) begrenzt und, dass das erste (18) und das dritte Maschinenelement (20) auf ihren einander zugewandten Seiten eine Trennfuge (24) begrenzen und dass die Nut (16) die Trennfuge (24) in axialer Richtung (3) überdeckt.

2. Dichtungsanordnung nach Anspruch 1, **dadurch gekennzeichnet, dass**, in radialer Richtung (6) betrachtet, zwischen der ersten (8) und der zweiten axialen Dichtkante (9) eine konkave Einschnürung (13) angeordnet ist.

3. Dichtungsanordnung nach Anspruch 1, **dadurch gekennzeichnet, dass** der zweite Radialschenkel (5) auf seiner dem ersten Radialschenkel (4) axial abgewandten Seite eine dritte axiale Dichtkante (14) aufweist.

4. Dichtungsanordnung nach Anspruch 3, **dadurch gekennzeichnet, dass** die dritte axiale Dichtkante (14), in radialer Richtung (6) betrachtet, im Wesentlichen mittig zwischen der ersten (8) und der zweiten axialen Dichtkante (9) angeordnet ist.

5. Dichtungsanordnung nach einem der Ansprüche 1 bis 4, **dadurch gekennzeichnet, dass** der zweite Radialschenkel (5), in radialer Richtung (6) betrachtet, kürzer als der erste Radialschenkel (4) ausgebildet ist.

6. Dichtungsanordnung nach einem der Ansprüche 1 bis 5, **dadurch gekennzeichnet, dass** das zweite Maschinenelement (19) eine sich im Wesentlichen in radialer Richtung (9) erstreckende zweite Dichtfläche (22) aufweist, die von der dritten axialen Dichtkante (14) unter axialer Vorspannung dichtend berührt ist.

7. Dichtungsanordnung nach einem der Ansprüche 1 bis 6, **dadurch gekennzeichnet, dass** das dritte Maschinenelement (20) eine sich im Wesentlichen in axialer Richtung erstreckende dritte Dichtfläche (23) aufweist und dass die dritte Dichtfläche (23) von der Abstützungsfläche (15), abhängig vom abzudichtenden Druck während der bestimmungsgemäßen Verwendung der Dichtung, unter radialer Vorspannung dichtend berührbar ist.

8. Dichtungsanordnung nach einem der Ansprüche 1 bis 7, **dadurch gekennzeichnet, dass** das erste Maschinenelement (18) durch einen Druckminderer, das zweite Maschinenelement (19) durch einen Ventilsitz einer CO₂-Flasche und das dritte Maschinenelement (20) durch ein Einschraubgewinde gebildet ist, wobei das erste (18), das zweite (19) und das dritte Maschinenelement (20) Bestandteile eines Wasseraufbereitungsgeräts (25) sind.

9. Wasseraufbereitungsgerät, umfassend eine Dichtungsanordnung nach einem der Ansprüche 1 bis 8.

## Claims

1. Seal assembly comprising a seal which comprises an annular seal (1) made of a seal material having a substantially U-shaped longitudinal section (2), wherein the annular seal (1) in the axial direction (3) is delimited on both sides by a first (4) and a second radial leg (5), wherein the radial legs (4, 5) in the radial direction (6) are connected to one another on the external circumference by an axial leg (7), wherein the first radial leg (4) on its side facing axially away from the second radial leg (5) has a first axial sealing edge (8) and a second axial sealing edge (9), wherein the second axial sealing edge (9) encloses the first axial sealing edge (8) by way of a radial spacing on the external circumference; wherein the axial leg (7) on the external circumference has a support face (15), and wherein the support face (15) and the first radial leg (4) delimit a groove (16) encircling the annular seal (1) on the external circumference, wherein the seal is disposed in an installation space (17), wherein the installation space (17) is delimited by a first (18), a second (19) and a third machine element (20), wherein the first machine element (18) has a first sealing face (21) which extends substantially in the radial direction (6) and under an axial pre-load is in sealing contact with the first axial sealing edge (8), and wherein the first sealing face (21), as a function of the pressure to be sealed and/or the assembly-related axial compression of the seal during the intended use of the latter, is able to be in sealing contact with the second axial sealing edge (9) under an axial pre-load, **characterized in that** the annular seal (1) comprises an imaginary radial plane (10), wherein - in the production-related state of the annular seal (1), the first axial sealing edge (8) by way of the radial plane (10) delimits a first axial spacing (11) which is larger than a second axial spacing (12) delimited by the second axial sealing edge (9) by way of the radial plane (10), and **in that** the first (18) and the third machine element (20) on their mutually facing sides delimit a joint (24), and **in that** the groove (16) covers the joint (24) in the axial direction (3).

2. Seal assembly according to Claim 1, **characterized in that**, when viewed in the radial direction (6), a concave constriction (13) is disposed between the first (8) and the second axial sealing edge (9).

3. Seal assembly according to Claim 1, **characterized in that** the second radial leg (5) has on its side facing axially away from the first radial leg (4) a third axial sealing edge (14).

4. Seal assembly according to Claim 3, **characterized in that** the third axial sealing edge (14), when viewed in the radial direction (6), is disposed so as to be substantially centric between the first (8) and the second axial sealing edge (9).

5. Seal assembly according to one of Claims 1 to 4, **characterized in that** the second radial leg (5), when viewed in the radial direction (6), is designed to be shorter than the first radial leg (4).

6. Seal assembly according to one of Claims 1 to 5, **characterized in that** the second machine element (19) has a sealing face (22) which extends substantially in the radial direction (9) and under an axial pre-load is in sealing contact with the third axial sealing edge (14).

7. Seal assembly according to one of Claims 1 to 6, **characterized in that** the third machine element (20) has a third sealing face (23) which extends substantially in the axial direction, and **in that** the third sealing face (23), as a function of the pressure to be sealed during the intended use of the seal, under a radial pre-load is able to be in sealing contact with the support face (15).

8. Seal assembly according to one of Claims 1 to 7, **characterized in that** the first machine element (18) is formed by a pressure reducer, the second machine element (19) by a valve seat of a CO₂ bottle, and the third machine element (20) by a screw-in thread, wherein the first (18), the second (19) and the third machine element (20) are components of a water treatment device (25).

9. Water treatment device, comprising a seal assembly according to one of Claims 1 to 8.

## Revendications

1. Agencement d'étanchéité, comprenant un joint d'étanchéité qui comprend une bague d'étanchéité (1) en un matériau d'étanchéité avec une section longitudinale (2) essentiellement en forme de U, la bague d'étanchéité (1) étant limitée dans la direction axiale (3) des deux côtés par une première (4) et une deuxième branche radiale (5), les branches radiales (4, 5) étant reliées l'une à l'autre dans la direction radiale (6) du côté de la périphérie extérieure par une branche axiale (7), la première branche radiale (4) présentant sur son côté détourné axialement de la deuxième branche radiale (5) un premier bord d'étanchéité axial (8) et un deuxième bord d'étanchéité axial (9), le deuxième bord d'étanchéité axial (9) entourant le premier bord d'étanchéité axial (8) à une distance radiale du côté de la périphérie extérieure, la branche axiale (7) présentant du côté de la périphérie extérieure une surface d'appui (15) et la surface d'appui (15) et la première branche radiale (4) délimitant une rainure (16) s'étendant du côté de la périphérie extérieure autour de la bague d'étanchéité (1), le joint d'étanchéité étant agencé dans un espace de montage (17), l'espace de montage (17) étant délimité par un premier (18), un deuxième (19) et un troisième élément de machine (20), le premier élément de machine (18) présentant une première surface d'étanchéité (21) s'étendant essentiellement dans la direction radiale (6), qui est en contact étanche avec le premier bord d'étanchéité axial (8) sous précontrainte axiale et la première surface d'étanchéité (21) pouvant être en contact étanche avec le deuxième bord d'étanchéité axial (9) sous précontrainte axiale, en fonction de la pression à étancher et/ou de la compression axiale du joint d'étanchéité due au montage pendant son utilisation conforme, **caractérisé en ce que** la bague d'étanchéité (1) comprend un plan radial imaginaire (10) ; dans l'état de fabrication de la bague d'étanchéité (1), le premier bord d'étanchéité axial (8) délimitant avec le plan radial (10) une première distance axiale (11) qui est supérieure à une deuxième distance axiale (12), que le deuxième bord d'étanchéité axial (9) délimite avec le plan radial (10), et **en ce que** le premier (18) et le troisième élément de machine (20) délimitent sur leurs côtés tournés l'un vers l'autre un joint de séparation (24), et **en ce que** la rainure (16) recouvre le joint de séparation (24) dans la direction axiale (3).

2. Agencement d'étanchéité selon la revendication 1, **caractérisé en ce que**, considéré dans la direction radiale (6), un rétrécissement concave (13) est agencé entre le premier (8) et le deuxième bord d'étanchéité axial (9).

3. Agencement d'étanchéité selon la revendication 1, **caractérisé en ce que** la deuxième branche radiale (5) présente un troisième bord d'étanchéité axial (14) sur son côté détourné axialement de la première branche radiale (4).

4. Agencement d'étanchéité selon la revendication 3, **caractérisé en ce que** le troisième bord d'étanchéité axial (14), considéré dans la direction radiale (6), est agencé essentiellement au centre entre le premier (8) et le deuxième bord d'étanchéité axial (9).

5. Agencement d'étanchéité selon l'une quelconque des revendications 1 à 4, **caractérisé en ce que** la deuxième branche radiale (5), considérée dans la direction radiale (6), est réalisée plus courte que la première branche radiale (4).

6. Agencement d'étanchéité selon l'une quelconque des revendications 1 à 5, **caractérisé en ce que** le deuxième élément de machine (19) présente une deuxième surface d'étanchéité (22) s'étendant essentiellement dans la direction radiale (9), qui est en contact étanche avec le troisième bord d'étanchéité axial (14) sous précontrainte axiale.

7. Agencement d'étanchéité selon l'une quelconque des revendications 1 à 6, **caractérisé en ce que** le troisième élément de machine (20) présente une troisième surface d'étanchéité (23) s'étendant essentiellement dans la direction axiale et **en ce que** la troisième surface d'étanchéité (23) peut être en contact étanche, sous précontrainte radiale, avec la surface d'appui (15), en fonction de la pression à étancher pendant l'utilisation conforme du joint d'étanchéité.

8. Agencement d'étanchéité selon l'une quelconque des revendications 1 à 7, **caractérisé en ce que** le premier élément de machine (18) est formé par un réducteur de pression, le deuxième élément de machine (19) par un siège de soupape d'une bouteille de CO₂ et le troisième élément de machine (20) par un filetage, le premier (18), le deuxième (19) et le troisième élément de machine (20) étant des constituants d'un appareil de conditionnement d'eau (25).

9. Appareil de conditionnement d'eau comprenant un agencement d'étanchéité selon l'une quelconque des revendications 1 à 8.
